(19) **Europäisches Patentamt / European Patent Office / Office européen des brevets**

(11) **EP 3 678 862 B1**

(12) # EUROPEAN PATENT SPECIFICATION

(45) Date of publication and mention
of the grant of the patent:
**24.03.2021 Bulletin 2021/12**

(21) Application number: **18773834.9**

(22) Date of filing: **15.08.2018**

(51) Int Cl.:
*B32B 27/08* *(2006.01)*      *B32B 27/28* *(2006.01)*
*B32B 27/30* *(2006.01)*      *B32B 27/36* *(2006.01)*

(86) International application number:
**PCT/IB2018/056132**

(87) International publication number:
**WO 2019/038640 (28.02.2019 Gazette 2019/09)**

(54) **TRANSPARENT MULTILAYER FILM COMPRISING POLYMERS**

TRANSPARENTER MEHRSCHICHTFILM MIT POLYMEREN

FILM MULTICOUCHE TRANSPARENT COMPRENANT DES POLYMERES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.08.2017 US 201762548045 P**

(43) Date of publication of application:
**15.07.2020 Bulletin 2020/29**

(73) Proprietor: **SHPP Global Technologies B.V.
4612 PX Bergen op Zoom (NL)**

(72) Inventors:
• **GUNBAS, Duygu Deniz
  4612 PX Bergen op Zoom (NL)**
• **JANSSEN, Pieter Jan Antoon
  4612 PX Bergen op Zoom (NL)**

• **VANDORMAEL, Bart
  4612 PX Bergen op Zoom (NL)**
• **VAN ZYL, Andries Jakobus Petrus
  4612 PX Bergen op Zoom (NL)**

(74) Representative: **Balder IP Law, S.L.
Paseo de la Castellana 93
5ª planta
28046 Madrid (ES)**

(56) References cited:
**EP-A1- 0 666 993**     **WO-A1-2018/015922**
**WO-A1-2018/015932**     **US-A- 5 278 694**
**US-A1- 2004 219 364**

Remarks:
The file contains technical information submitted after
the application was filed and not included in this
specification

**Description**

BACKGROUND

Multilayer polymer films can provide desirable properties such as transparency in numerous products and applications. For ease of manufacturing and cost, it can be desirable to produce multilayer polymer films having transparency using a minimum number of individual layers.

It would be desirable to provide improved transparent multilayer films and articles including such improved transparent multilayer films.

BRIEF DESCRIPTION

A transparent multilayer film including a plurality of layers can include a polymer A layer comprising polymer A and a polymer B layer comprising polymer B adjacent to the polymer A layer. At least one of: a differential solubility parameter ($\Delta\delta_{AB}$) of polymer A towards polymer B equal to or less than 2.2 MPa$^{1/2}$; and a differential solubility parameter ($\Delta\delta_{AB}$) of polymer B towards polymer A can be equal to or less than 2.2 MPa$^{1/2}$.

An article including the above-described transparent multilayer film.

A method for producing the above-described transparent multilayer film can include coextruding polymer A and polymer B to form the transparent multilayer film.

A method for converting the above-described transparent multilayer film into an article can include shaping the transparent multilayer film to obtain the article, wherein the shaping comprises at least one of thermoforming and vacuum forming.

BRIEF DESCRIPTION OF THE DRAWINGS

The following figures are exemplary embodiments wherein the like elements are numbered alike.

FIG. 1 is a simplified schematic diagram representing an article including a transparent multilayer film.
FIG. 2 is a simplified schematic diagram representing a method of making a transparent multilayer film.
FIG. 3 is a 2D solubility parameter map of the Hansen hydrogen bonding solubility parameters and the Hansen non-hydrogen bonding solubility parameters of various polymers with polycarbonate.
FIG. 4 is a graphical illustration of the total transmission spectra for the transparent multilayer films produced in Example 2.
FIG. 5 is a graphical illustration of the direct transmission spectra for the transparent multilayer films produced in Example 2.
FIG. 6 is a graphical illustration of the direct transmission spectra for the transparent multilayer films produced in Comparative Example A.
FIGs. 7A and 7B are atomic Force Microscopy (AFM) images of the transparent multilayer films produced in Example 2 and Comparative Example A, respectively.

The above described and other features are exemplified by the following detailed description, examples, and claims.

DETAILED DESCRIPTION

Described herein are transparent multilayer films, articles including such films, and methods for producing such films and articles that include a polymer A and a polymer B that are rheologically compatible and thermodynamically miscible, as indicated by the polymers having a differential solubility parameter towards one another equal to or less than 2.2 MPa$^{1/2}$. Previous transparent multilayer films suffered from design and manufacturing constraints related to the requirement of a low refractive index difference between materials used in the films, increasingly thinner layers (i.e., individual layers), or increasing thinner transparent multilayer films that required complex and costly manufacturing processes in order to produce the transparent multilayer films with the desired transparency. For instance, to increase the total transmission of light through previous transparent multilayer films, the film designs would have required materials with similar refractive indexes (e.g., a difference in the refractive indexes of the materials equal to or less than 0.05), thin films (e.g., less than 50 micrometers thickness), a large number of individual layers (e.g., 512 or more individual layers), thin individual layers (e.g., less than 90 nanometers thickness), or a combination of at least one of the foregoing. As result of such design constraints, accurate control of the thicknesses of the individual layers in the previous transparent multilayer films was challenging due to the low tolerance for variation in the individual layer thickness.

As used herein, "differential solubility parameter" ($\Delta\delta_{AB}$) can be calculated by Formula (1):

$$\Delta\delta_{AB} = [(\delta_{HA} - \delta_{HB})^2 + (\delta_{vA} - \delta_{vB})^2]^{1/2} \qquad \text{Formula (1)}$$

where $\delta_{HA}$ is the Hansen hydrogen bonding solubility parameter of polymer A, $\delta_{vA}$ is the Hansen non-hydrogen bonding solubility parameter of polymer A, $\delta_{HB}$ is the Hansen hydrogen bonding solubility parameter of polymer B, $\delta_{vB}$ is the Hansen non-hydrogen bonding solubility parameter of polymer B. The Hansen non-hydrogen bonding solubility parameter of polymer A ($\delta_{vA}$) can be calculated by Formula (2):

$$\delta_{vA} = (\delta_{pA}^2 + \delta_{dA}^2)^{1/2} \qquad \text{Formula (2)}$$

where $\delta_{pA}$ is the Hansen polar solubility parameter of polymer A and $\delta_{dA}$ is the Hansen dispersive solubility parameter of polymer A. The Hansen non-hydrogen bonding solubility parameter of polymer B ($\delta_{vB}$) can be calculated by Formula (3):

$$\delta_{vB} = (\delta_{pB}^2 + \delta_{dB}^2)^{1/2} \qquad \text{Formula (3)}$$

where $\delta_{pB}$ is the Hansen polar solubility parameter of polymer B and $\delta_{dB}$ is the Hansen dispersive solubility parameter of polymer B. The Hansen polar solubility parameter, Hansen dispersive solubility parameter, and the Hansen hydrogen solubility parameter can be calculated by the van Krevelen group contribution method as described in van Krevelen, D.W., "Prediction of Solubility-Parameter Components", K.T. Nijenhues (Ed.), Properties of Polymers, Elsevier, Amsterdam (1976), pp. 213-216. See also, Hansen, C.M., "Hansen Solubility Parameters: A User's Handbook, CRC (2007).

An indication of the rheological compatibility and thermodynamic miscibility of polymers can be provided graphically by the Hansen solubility parameters by using the following steps: 1) calculation of the Hansen solubility parameters for Polymer A and Polymer B as described above; 2) simplification of the Hansen solubility parameters into hydrogen-bonding and non-hydrogen-bonding as described above; 3) plot a 2D solubility parameter map, with a x-axis of Hansen non-hydrogen bonding solubility parameters, and a y-axis of Hansen hydrogen bonding solubility parameters; 4) assessment of the distance between polymer A and polymer B on the 2D solubility parameter map of step 3). If the distance between polymer A and polymer B on the 2D solubility parameter map is large there is low thermodynamic miscibility between the two polymers. If the distance between polymer A and polymer B on the 2D solubility parameter map is small, thermodynamic miscibility is high between polymer A and polymer B (and vice versa). For intermediate distances between polymer A and polymer B on the 2D solubility parameter map, polymer A can be rheologically compatible with polymer B, but may not be as thermodynamic miscibility. By pairing polymers with such a Hansen solubility parameters, rheological compatibility and thermodynamic miscibility in the multilayer films can be predicted. (See Example 1 below).

As used herein, "rheologically compatible" or rheological compatibility" means that two flowable polymers have viscosities (e.g., similar or the same viscosities) to prevent viscous encapsulation (e.g., when two molten polymers are flowed in a channel, the lower viscosity molten polymer goes to the channel wall, while the higher viscosity molten polymer goes to the center of a channel).

As used herein, "thermodynamically miscible" or thermodynamic miscibility" means that two flowable polymers can be solubilized in, be dissolved into, be blended with, have an affinity with, form a gradient with, at least a portion of one another by thermodynamic mixing.

As used herein "flowable" refers to the ability to move as in a fluid form (e.g., as a polymer melt).

As used herein, "transparent" or "transparency" refers to a total transmission of light at a wavelength in the range of 360 nanometers to 750 nanometers of at least 60%, as measured in accordance with ASTM D-1003-00, Procedure A, under D65 illumination, with a 10 degrees observer, at a thickness of the multilayered article using a Perkin-Elmer Lambda™ 950 nanometer (nm) spectrophotometer equipped with a 15 centimeter integrating sphere, measured over a range of 250 nm to 1000 nm in steps of 1 nm.

By providing a polymer A and a polymer B with a differential solubility parameter towards one another equal to or less than 2.5 MPa$^{1/2}$ in adjacent individual layers, an increase in the direct transmission of light through the transparent multilayer film can be achieved as compared to previous multilayer transparent films that did not include such a polymer A and a polymer B in adjacent individual layers. By increasing the direct transmission of light, and optionally increasing the total transmission of light, the optical properties (e.g., transparency, clarity, and color) of the transparent multilayer films are improved.

Without wishing to be bound by theory, it is believed that as a result of thermodynamically mixing polymer A and polymer B at each interface of the individual layers, the refractive index contrast between the individual layers can be reduced, which in turn decreases the intensity of reflections. Thermodynamically mixing polymer A and polymer B results in a refractive index value at the interface which is in between that of polymer A and polymer B (e.g., a polymer C is produced *in situ*).

It was surprisingly found that, as a result of the increased direct transmission of light, the thickness of the each of the plurality of individual layers can increase or the total thickness of the transparent multilayer film can increase (e.g., for the same number of individual layers) while maintaining or improving a desired or targeted optical property (e.g., total transmission, direct transmission, or total reflectance). As the thickness of the each of the plurality of individual layers increases or the total thickness of the transparent multilayer film increases (e.g., for the same number of individual layers), the complexity of the process for producing the transparent multilayer film can be reduced or the processing window(s) can be increased (e.g., the tolerances for thickness variation can be increased). Thus, the transparent multilayer films of the present disclosure (e.g., transparent multilayer films with less or thicker individual layers than previous transparent multilayer films) can allow for greater freedom of design in articles including the transparent multilayer films and the methods of making the transparent multilayer films.

The polymer A can comprise a polycarbonate that meets the differential solubility parameter qualifications discussed above. For instance, the polymer A can comprise polycarbonate, preferably a polycarbonate copolymer. Polymer A can be a polycarbonate copolymer such as polycarbonate-siloxane block copolymers (such as LEXAN™ EXL Resin). Another possible copolymer is polycarbonate and iso- and terephthalate esters of resorcinol (ITR) (such as LEXAN™ SLX Resin). Another possible copolymer is polycarbonate and N-phenylphenol phthaleinylbisphenol (PPP-BP) (such as LEXAN™ XHT Resin).

The polymer A can be polyetherimide (PEI) (Such as ULTEM™ Resin) and copolymers thereof such as EXTEM™ Resin and siloxane-polyetherimide (SILTEM™ Resin).

The polymer A can be a block copolymer of which the hardblock or the softblock section thereof meets the differential solubility parameter qualifications discussed above (e.g. LEXAN™ EXL Resin, SILTEM™ Resin). The polymer A can be an amorphous polymer.

The polymer B can be an amorphous polymer that meets the solubility qualifications discussed above. The polymer B can comprise at least one of a copolyester, acrylate, and a sulfone-based polymer.

The copolyester can include at least one of spiroglycol modified polyethylene terephthalate, poly-cyclohexylenedimethylene terephthalate glycol, poly(1,4-cyclohexylenedimethylene 1,4-cyclohexanedicarboxylate), and polyethyelene naphthalate.

The acrylate can include at least one of polymethylmethacrylate and polybutylmethacrylate. The sulfone-based polymer can include polysulfone, polyethersulfone, polyphenylsulfone, or a combination comprising at least one of the foregoing.

The polymer B can be a blend including a third polymer (e.g., a functionalized polymer) that improves miscibility with polymer A. The polymer B (with or without a third polymer) can be not thermodynamically miscible or partial thermodynamically miscible and include a compatibilization agent that can reduce the differential solubility parameter with polymer A. A compatibilizer can be a reactive agent (e.g., reactive precursors such as epoxy functionalized monomers) or a catalyst (e.g., titanium or zinc) to induce transesterification at the interface of polymer A layer and polymer B layer.

The transparent multilayer film can include alternating layers of polymer A and polymer B. For instance, the transparent multilayer film can include alternating layers of polycarbonate and at least one of a copolyester, an acrylate, and a sulfone-based polymer. The alternating layers can be repeating in the transparent multi-layer film (e.g., can be in an A/B/A/B or A/B/C/A/B/C pattern).

An absolute difference between a refractive index of polymer A and a refractive index of polymer B can be less than or equal to 0.15, or less than or equal to 0.10, preferably less than or equal to 0.05, measured at a wavelength of 589 nanometers. For instance, an absolute difference between a refractive index of polycarbonate and a refractive index of at least one of a copolyester, acrylate, and sulfone-based polymer can be less than or equal to 0.15, or less than or equal to 0.10, preferably less than or equal to 0.05, measured at a wavelength of 589 nanometers.

A refractive index of polymer A (e.g., polycarbonate) can be 1.57 to 1.59, measured at a wavelength of 589 nanometers.

A refractive index of polymer B (e.g., at least one of a copolyester, acrylate sulfone-based polymer) can be 1.50 to 1.63, measured at a wavelength of 589 nanometers.

Optionally, the polymer A layer can comprise additive(s) such as stabilizer(s), colorants, dyes, and so forth, with the proviso that the additive(s) are selected so as to not significantly adversely affect the desired properties of polymer A (e.g., optical properties). Polymer A layer can comprise additive(s) that undergo photo-chemical rearrangements to produce areas which interact with light differently (e.g., UV active fluorescence), thereby forming a mark (text, logo, barcode, image). The additive can be a photoactive additive or colorant, which in certain media may be regarded as photochromic.

For instance, an individual layer can comprise a laser marking additive that will form a mark when exposed to a laser. The type of laser marking additive and the type of laser are dependent upon the application and the desired mark. The layer can also comprise a laser welding additive that can absorb and convert the laser light into heat for joining polymers (e.g., join a transparent multilayer film to a polymer article or to another multilayer film) together with high precision.

Optionally, the polymer B layer can comprise additive(s) such as stabilizer(s), colorants, dyes, and so forth, with the proviso that the additive(s) are selected so as to not significantly adversely affect the desired properties of polymer B (e.g., optical properties). Polymer B layer can comprise additive(s) that undergo photo-chemical rearrangements to produce areas which interact with light differently (e.g., UV active fluorescence), thereby forming a mark (text, logo, barcode, image). The additive can be a photoactive additive or colorant, which in certain media may be regarded as photochromic.

Some possible additives that can be employed in at least one of polymer A layer or polymer B layer include hydroxybenzophenones, hydroxybenzotriazoles, hydroxybenzotriazines, cyanoacrylates, oxanilides, benzoxazinones, benzylidene malonates, hindered amine light stabilizers, nano-scale inorganics, and combinations comprising at least one of the foregoing. Other additives can include members of the spiropyran, spirooxazine, fulgide, diarylethene, spirodihydroindolizine, azo-compounds, and Schiff base, benzo- and naphthopyrans families, and combinations comprising at least one of the foregoing. Other possible additives include taggants, e.g., phosphors such as yttrium oxysulfide (europium-doped yttrium oxysulfide) and/or a nitride taggant material. For instance, nitride material that is optionally doped with cerium and/or europium, a nitrido silicate, a nitride orthosilicate, an oxonitridoaluminosilicate, or a combination comprising at least one of the foregoing.

The transparent multilayer film can have a total thickness based upon the application and requirements thereof. For instance, the total thickness can be greater than or equal to 70 micrometers, or greater than or equal to 100 micrometers, preferably greater than or equal to 150 micrometers, such as 200 micrometers to 4,000 micrometers, 200 micrometers to 1,500 micrometers, or 250 micrometers to 550 micrometers.

The thickness of each of the plurality of layers of the transparent multilayer film can be greater than or equal to 90 nanometers, or greater than or equal to 100 nanometers, preferably greater than or equal to 110 nanometers, such as 0.1 micrometers to 10 micrometers, or 0.5 micrometers to 5 micrometers, or even 0.8 micrometers to 3 micrometers. It is noted that the thickness of the polymer A layer can be the same as the thickness of the polymer B layer. Alternatively, the thickness of the polymer A layer can be different than the thickness of the polymer B layer.

The polymer A layer and the polymer B layer can be present within the transparent multilayer film in a certain ratio. For instance, polymer A layers and polymer B layers can be present in a volume ratio of 20:80 to 80:20, or 40:60 to 60 to 40, preferably 45:65 to 65:45.

The transparent multilayer film can comprise a plurality of layers greater than or equal to 4 layers, for instance, greater than or equal to 30 layers, greater than or equal to 64 layers, and greater than or equal to 250 layers. The total number of layers can be 32 to 1024 layers, or 64 to 512 layers. The plurality of layers of the transparent multilayer film can include less than or equal to 512 layers, or less than or equal to 256 layers, preferably less than or equal to 128 layers, or even more preferably less than or equal to 64 layers. The transparent multilayer film can include 4 layers to 256 layers, or 4 to 128 layers, preferably 4 to 64 layers.

The transparent multilayer films can provide greater direct transmission of light as compared to previous transparent multilayer films that do not include polymer A and polymer B in adjacent layers. For instance, when light at a wavelength of 360 nanometers to 750 nanometers is directed towards the transparent multilayer film, a direct transmission of the light can be greater than or equal to 70%. For instance, a total thickness of the transparent multilayer film can be greater than or equal to 100 micrometers, and wherein, when light at a wavelength of 360 nanometers to 750 nanometers is directed towards the transparent multilayer film, a direct transmission of the light can be greater than or equal to 70%. Desirably, a total thickness of the transparent multilayer film can be greater than or equal to 250 micrometers, and wherein, when light at a wavelength of 360 nanometers to 750 nanometers is directed towards the transparent multilayer film, a direct transmission of the light can be greater than or equal to 80%.

The transparent multilayer films can provide greater total transmission of light as compared to previous transparent multilayer films that do not include polymer A and polymer B in adjacent layers. For instance, when light at a wavelength of 360 nanometers to 750 nanometers is directed towards the transparent multilayer film, a total transmission of the light is greater than or equal to 70%.

The transparent multilayer films can provide less total reflectance of light as compared to previous transparent multilayer films that do not include polymer A and polymer B in adjacent layers. For instance, when light at a wavelength of 360 nanometers to 750 nanometers is directed towards the transparent multilayer film, a total reflectance of the light is less than or equal to 30%, or less than or equal to 25%, preferably less than or equal to 20%. For instance, a total thickness of the transparent multilayer film can be greater than or equal to 100 micrometers, and wherein, when light at a wavelength of 360 nanometers to 750 nanometers is directed towards the transparent multilayer film, a total reflectance of the light can be less than or equal to 20%. As the transparent multilayer film has a low total reflectance, consistency in perceived color (e.g., at various viewing angles) is improved as compared to previous films that do not include a polymer A layer adjacent to a polymer B layer.

An article can include the above-described transparent multilayer films. The article can be at least one of a display, security window film, ultraviolet light reflector, infrared light reflector, reflective polarizer, and optical filter.

A method for producing the above-described transparent multilayer films can include coextruding a polymer A stream and polymer B stream to form the transparent multilayer film. By coextruding polymer A and polymer B in adjacent layers, at least a portion of polymer A layer can thermodynamically mix with at least a portion of polymer B layer. The method can include splitting a composite layer stream comprising polymer A stream and polymer B stream from the step of coextruding to obtain two or more sub-streams, repositioning the sub-streams an overlapping manner, and contacting the sub-streams to obtain alternating layers of polymer A and polymer B.

For instance, the method disclosed herein for making a transparent multilayer film can include coextruding two or more feed streams in an overlapping manner to form a composite layer stream, e.g., feed streams comprising polymer A stream and polymer B stream, optionally 2 - 6 polymers, or 2 - 4 polymers. The feed streams can be coextruded using an extrusion cycle comprising splitting the composite layer stream into two or more sub-streams which can then be repositioned in an overlapping manner, followed by contacting the sub-streams (e.g., lamination). The extrusion cycle can be repeated until a total number of desired layers is achieved. The total number of layers can be represented by the formula $X(Y^N)$, wherein X represents the number of feed streams, Y represents the number of sub-streams, and N represents a number of times the extrusion cycle is repeated. For instance, the extrusion cycle can produce a transparent multilayer film with polymer A layers and polymer B layers that overlap in an alternating manner and are present in a volume ratio of 20:80 to 80:20, or 40:60 to 60:40, preferably 45:65 to 65:45, more preferably a 1:1. Such transparent multilayer films can be formed using the layer multiplication technology and equipment commercially available from Nordson Extrusion Dies Industries LLC, Chippewa Falls, WI.

The method disclosed herein for making a transparent multilayer film can include contacting two or more feed streams in an overlapping manner forming a composite layer stream, e.g., within a feed block of a co-extrusion apparatus. The two or more feed streams can be overlaid vertically to form a composite layer stream.

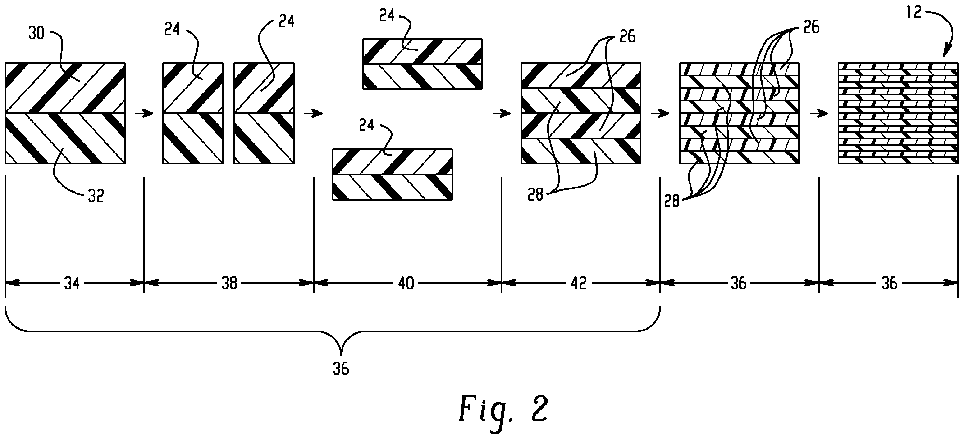

Once the composite layer stream is formed, it can be processed in an extrusion cycle comprising splitting the composite layer stream into two or more sub-streams. For instance, the composite layer stream can be split vertically into two or more diverging sub-streams, wherein each sub-stream comprises at least a portion of each original feed stream. In other words, each sub-stream comprises a portion of all of the layers of the composite layer stream. The sub-streams can then be repositioned in an overlapping manner. For instance, each sub-stream can travel through its own divergent channel within a co-extrusion apparatus which direct the sub-streams to an overlaid position (e.g., a vertically overlaid position) where the sub-streams contact one another to form a subsequent composite layer stream comprising both of the sub-streams aligned (e.g., vertically) (See FIG. 2). The extrusion cycle combines the two or more sub-streams. For instance, the sub-streams are released from the vertically overlaid channels, thus contacting each other in an overlapping manner. The extrusion cycle can be repeated until a transparent multilayer film having the desired number of layers is achieved. Once the transparent multilayer film formation is complete, a skin layer (i.e., protective layer) can be applied to one or both sides of the transparent multilayer film.

The total number of layers can be represented by the formula $X(Y^N)$, wherein X represents the number of feed streams, Y represents the number of sub-streams, and N represents a number of times the extrusion cycle is repeated. For instance, the extrusion cycle can produce a transparent multilayer film with polymer A layers and polymer B layers that are distinguishable and overlap in an alternating manner.

The transparent multilayer film can be formed using an extrusion feedblock that enables multilayer arrangements. Using an extrusion feedblock, the polymer A stream and polymer B stream can each be individually split into many (e.g., more than 10) substreams, which are then alternatingly recombined to form the transparent multilayer film. For instance, extrusion feedblocks such as those commercially available from Cloeren Inc, Orange Texas.

For co-extruding polymer A and polymer B, any temperature above the glass transition temperature or melting point of both polymers, and below a temperature at which one of the polymers starts to degrade, can be used. The temperature can be one at which the viscosities of the polymers are closely matched, and the viscosities of both polymers are not too high (as it requires too high pressures to operate then), but also not too low so there is not enough melt strength in forming the film out of the die. For instance, the coextruding can be at temperature of 200°C to 320°C, or 220°C to 300°C, preferably 240°C to 280°C. In selecting temperature for co-extruding, the resulting viscosities of polymer A stream and polymer B stream can be matched (e.g., a ratio of 2:1 to 1:2) such that contact, adhesion, dissolution, blending, or miscibility between adjacent portions of the feed streams is achieved and distortion or viscous encapsulation of the layers is reduced or eliminated.

As used herein, "glass transition temperature" or (Tg) refers to a temperature at which an amorphous polymeric material changes from a hard, solid-like state into a viscous or elastic fluid-like state, as determined according to ASTM E1640-13. As used herein, "melting point" refers to a temperature at which a semi-crystalline or crystalline polymeric material changes from a hard, solid-like state into a viscous or elastic fluid-like state, as determined by differential scanning calorimetry (DSC 8000 from PerkinElmer, UK) at a heating rate of 10°C/min from 25°C to 170°C according to ASTM E794-06.

A method for converting the above-described transparent multilayer films into an article can include shaping the transparent multilayer film to obtain the article, wherein the shaping comprises at least one of thermoforming and vacuum forming.

An article can be obtained by the above described method. For instance, articles including the transparent multilayer film(s) can comprise the transparent multilayer film(s), adhesive layer(s), and protective layer(s), coating(s) as well as combinations comprising at least one of these layers. For instance, the article can comprise a protective layer on one side of a transparent multilayer film, with an adhesive layer therebetween. Optionally, on the other side of the transparent multilayer film can be another protective layer, an adhesive layer, a coating (for scratch resistance and surface hardness enhancement).

The protective layer can be any layer that provides protection to the transparent multilayer film. The protective layer can be a layer having a sufficient transparency to allow viewing through the transparent multilayer film. The protective layer can have a total transmission of greater than or equal to 75%, for instance, greater than or equal to 85%, and even greater than or equal to 90%, or greater than or equal to 95%. The protective layer can have a direct transmission of greater than or equal to 75%, for instance, greater than or equal to 85%, and even greater than or equal to 90%, or greater than or equal to 95%.

Possible materials that can be used for the protective layer include those identified for use in the polymer A stream, e.g., a polycarbonate, or polyolefins such as polypropylene. The protective layer or the adhesive layer can be applied to the transparent multilayer film using various processes such as lamination, bonding, coating, and so forth.

The method disclosed herein for making an article can include applying additional layers to the transparent multilayer film. These additional layers can be adhered together using lamination, bonding, or a combination comprising at least one of the foregoing.

A more complete understanding of the components, processes, and apparatuses disclosed herein can be obtained by reference to the accompanying drawings.

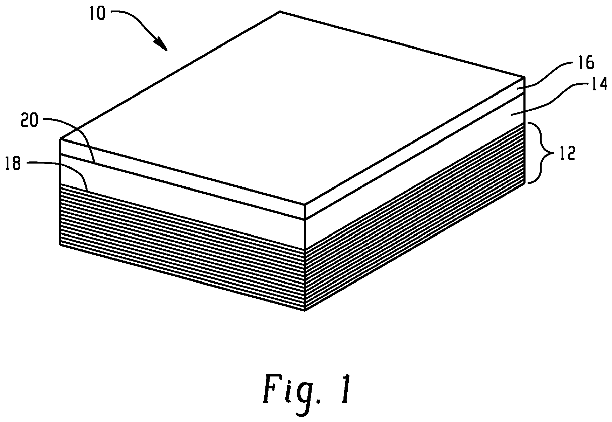

Referring now to FIG. 1, article 10 can include transparent multilayer film 12. Adhesive layer 14 can be located between transparent multilayer film 12 and protective layer 16. For instance, adhesive layer 14 can be located on surface 18 of transparent multilayer film 12, while transparent layer 16 can be located on surface 20 of adhesive layer 14.

Referring now to FIG. 2, two feed streams, polymer A stream 30 and polymer B stream 32, can be contacted in an overlapping manner to form the composite layer stream 34 and simultaneously extruded. Then, in extrusion cycle 36, the composite layer stream 34 can be split 38 into two or more sub-streams 24 which are repositioned 40 in an overlapping manner, and recombined to form single stream 42. The splitting and repositioning is repeated in as many further extrusion cycles 36 as desired until a desired total number of layers is achieved.

The total number of layers can be represented by the formula $X(Y^N)$, wherein X represents the number of feed streams, Y represents the number of sub-streams, and N represents a number of times the extrusion cycle is repeated. For instance, FIG. 2 depicts two feed streams 30 and 32, two sub-streams 24, three extrusion cycles 36, and a transparent multilayer film 12 with 16 total layers. For instance, FIG. 2 depicts polymer A layers 26 and polymer B layers 28 that overlap in an alternating manner and are present in a 1:1 volume ratio.

EXAMPLES

The following components listed in Table 1 were used in the examples. Unless specifically indicated otherwise, the amount of each component is in weight percent in the following examples, based on the total weight of the composition.

Table 1

| Acronym | Description | Source |
|---|---|---|
| PC | BPA polycarbonate made by a melt process with an MVR at 300°C/1.2kg, of 5.1-6.9 grams/cm$^3$; commercially sold under the trade name LEXAN™ (LEXAN™ OQ1028). | SABIC™ |
| PMMA | Poly(methyl methacrylate) with a melt flow index of 7.3 grams/10 minutes (DIAKON™ CLG902) | Lucite™ International |
| SPG PET | Spiroglycol modified PET (molar ratio of spiroglycol to ethylene glycol is 45 to 55) and terephthalic acid or an ester thereof (AKESTRA™ 110) | Perstorp and Mistubishi Gas Chemical Company |

Physical measurements were made using the tests and test methods described below.

The total transmission ($T_{Total}$) and total reflection of the transparent multilayer films were measured in accordance with ASTM D-1003-00, Procedure A, under D65 illumination, with a 10 degrees observer, at a thickness of the multilayered article using a Perkin-Elmer Lambda™ 950 nanometer (nm) spectrophotometer equipped with a 15 centimeter integrating sphere, measured over a range of 250 nm to 1000 nm in steps of 1 nm. Diffuse transmission ($T_{Diffuse}$) was measured by excluding the normally transmitted beam from the measurement by opening the reflectance port (i.e., removing the plate from the face opposite the light source), which allowed the linear transmitted light to exit the integrating sphere. Consequently, only the diffuse transmitted light captured in the integrating sphere was measured.

Direct transmission ($T_{Direct}$) was determined by the Formula (4):

$$T_{Direct} = T_{Total} - T_{Diffuse} \hspace{3cm} \text{Formula (4)}$$

The refractive index was measured using a polarized helium-neon laser with transverse-electric incidence (electric field vibrating transverse to the plane of incidence) at the standard 633 nanometer (nm) wavelength and it four other wavelengths (407 nm, 532 nm, 1312 nm, 1550 nm) at a temperature of 25°C using a Metricon Model 2010 Prism Coupler available from Metricon Corp., Pennington, N.J. in accordance with ISO 489 (1999). Cauchy fitting software was used to calculate the complete refractive index versus wavelength curves from the refractive index measurements at five wavelengths mentioned above.

Example 1

Hansen solubility parameters were calculated for exemplary polymers A and polymers B and summarized in Table 2.

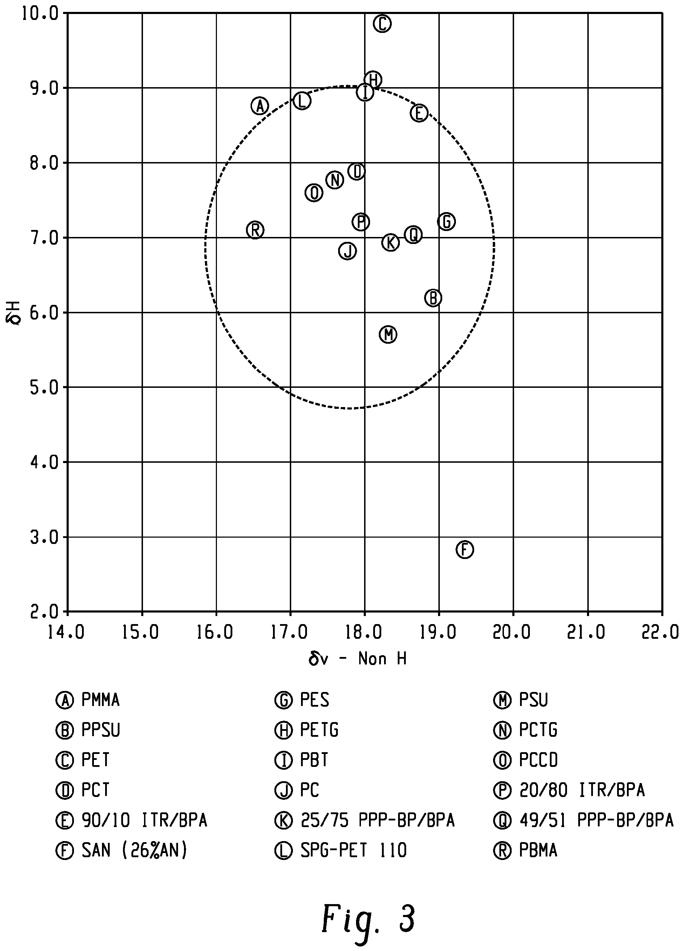

A 2D solubility parameter map was generated using the calculated Hansen solubility parameters. As shown in FIG. 3, filled symbols represent fast crystallizing and opaque polymers. Open or patterned symbols represent amorphous or slow crystallizing and transparent polymers. Triangle-shaped symbols represent PET derivatives. Diamond-shaped symbols represent sulfone-based polymers. The polymers with symbols in the dotted circle have rheological compatibility and thermodynamic miscibility with polycarbonate.

Table 2

| | $\delta_d$ (dispersive) | $\delta_p$ (polar) | $\delta_v = (\delta_p^2 + \delta_d^2)^{1/2}$ | $\delta_H$ (hydrogen bonding) |
|---|---|---|---|---|
| Polycarbonate (PC) | 17.7 | 1.5 | 17.8 | 6.8 |
| Styrene-acrylonitrile (26% acrylonitrile (SAN) | 18.1 | 6.9 | 19.3 | 2.8 |
| Polybutylmethacrylate (PBMA) | 16.1 | 3.5 | 16.5 | 7.1 |
| Polyetherimide (ULTEM™ PEI) | 18.2 | 2.1 | 18.4 | 7.1 |
| Polyethylene terephthalate glycol-modified (PETG) | 18.0 | 2.1 | 18.1 | 9.1 |
| Polycyclohexylenedimethylene terephthalate glycol (PCTG) | 17.4 | 2.5 | 17.6 | 7.8 |
| Polyethylene terephthalate (PET) | 18.1 | 2.4 | 18.3 | 9.9 |
| Polybutylene terephthalate (PBT) | 17.9 | 2.0 | 18.0 | 8.9 |
| Poly(1,4-cyclohexanedimethyl-1,4-cyclohexanedicarboxylate) (PCCD) | 17.3 | 1.4 | 17.3 | 7.6 |
| Polycyclohexylenedimethylene terephthalate (PCT) | 17.8 | 1.6 | 17.9 | 7.9 |
| polyethersulfone (PES) | 19.0 | 1.8 | 19.1 | 7.2 |
| polysulfone (PSU) | 18.3 | 1.0 | 18.3 | 5.7 |
| polyphenylsulfone (PPSU) | 18.9 | 1.2 | 18.9 | 6.2 |
| polymethylmethacrylate (PMMA) | 15.7 | 5.4 | 16.6 | 8.8 |
| spiroglycol modified polyethylene terephthalate (SPG-PET 110) | 16.8 | 3.6 | 17.2 | 8.9 |
| Copolymer of polycarbonate and iso- and terephthalate esters of resorcinol (20/80 ITR/BPA) | 17.9 | 1.6 | 17.9 | 7.2 |

(continued)

|  | $\delta_d$ (dispersive) | $\delta_p$ (polar) | $\delta_v = (\delta_p^2 + \delta_d^2)^{1/2}$ | $\delta_H$ (hydrogen bonding) |
|---|---|---|---|---|
| Copolymer of polycarbonate and iso- and terephthalate esters of resorcinol (90/10 ITR/BPA) | 18.6 | 1.9 | 18.7 | 8.7 |
| Copolymer of polycarbonate and N-phenylphenol phthaleinylbisphenol (25/75 PPP-BP-BPA) | 18.0 | 3.5 | 18.4 | 6.9 |
| Copolymer of polycarbonate and N-phenylphenol phthaleinylbisphenol (32/68 PPP-BP-BPA) | 18.1 | 3.6 | 18.4 | 7.0 |
| Copolymer of polycarbonate and N-phenylphenol phthaleinylbisphenol (49/51 PPP-BP-BPA) | 18.3 | 3.8 | 18.6 | 7.0 |

Example 2 and Comparative Example A

In Example 2, three PC and SPG PET alternating layer, transparent multilayer films were produced with total thicknesses of 50 micrometers, 100 micrometers, and 250 micrometers. In Comparative Example A, three PC and PMMA alternating layer, transparent multilayer films were produced, with total thicknesses of 50 micrometers, 100 micrometers, and 200 micrometers.

At a wavelength of 589 nanometers (nm), the PC had a refractive index of 1.59, the PMMA had a refractive index of 1.49, and the SPG PET had a refractive index of 1.54.

Production of Transparent Multilayer Films: In each of the examples, the transparent multilayer films were produced using Layer Multiplication Technology from Nordson-EDI (Chippewa Falls, Wisconsin). A total of 8 splitters were used for layer multiplication, which provided 512 (i.e., $2^{8+1}$) alternating layers. A polypropylene skin layer was applied to the multilayer material after layer multiplication, but before the polymer entered a coat hanger die. The function of this polypropylene skin layer was to protect the multilayer structure. The polypropylene skin layer was removed prior to performing measurements on the transparent multilayer films.

All three polymer streams were fed into the multiplication units and the feedblock by single screw extruders. In Comparative Example A, the extruder temperatures were set to 240°C. In Example 2, the extruder temperatures were set to 260°C to obtain a better viscosity match between the two polymers.

The weight loss in the polymer hoppers above the extruders was tracked, which allowed for real-time adjustment to the rotations per minute of each extruder to give a constant mass flow of each polymer. A 400 millimeter (mm) wide coat hanger die was used, with a die lip opening of 500 micrometers. The transparent multilayer films were cut to be 250 mm wide. A total throughput of the system was 14 kilograms per hour (kg/hr), resulting in a throughput of 4 kg/hr for the PC, a throughput of 3.9 kg/hr for the PMMA, a throughput of 4.15 kg/hr for the SPG PET (the PMMA and SPG PET had different throughputs compared to the PC to compensate for density differences), and a throughput of 6 kg/hr for the polypropylene.

The uptake speed of the roll stack behind the die was set to 3 meters per minute (m/min) to produce a 100 micrometer thick transparent multilayer film after removal of the skin layer. Adjustment of the uptake speed was used to adjust the total thickness of the transparent multilayer film. For instance, an uptake speed of 6 m/min produced a 50 micrometer thick transparent multilayer film, while an uptake speed of 1.5 m/min produced 200 micrometer thick transparent multilayer film. The thickness of each of the plurality of layers varied from 98 nm to 488 nm upon increasing total transparent multilayer film thickness from 50 to 250 micrometers, respectively.

The transparent multilayer films produced in Example 2 included PC in an amount of 50 volume % and SPG PET in an amount of 50 volume %. The transparent multilayer films produced in Comparative Example A included PC in an amount of 50 volume % and PMMA in an amount of 50 volume %.

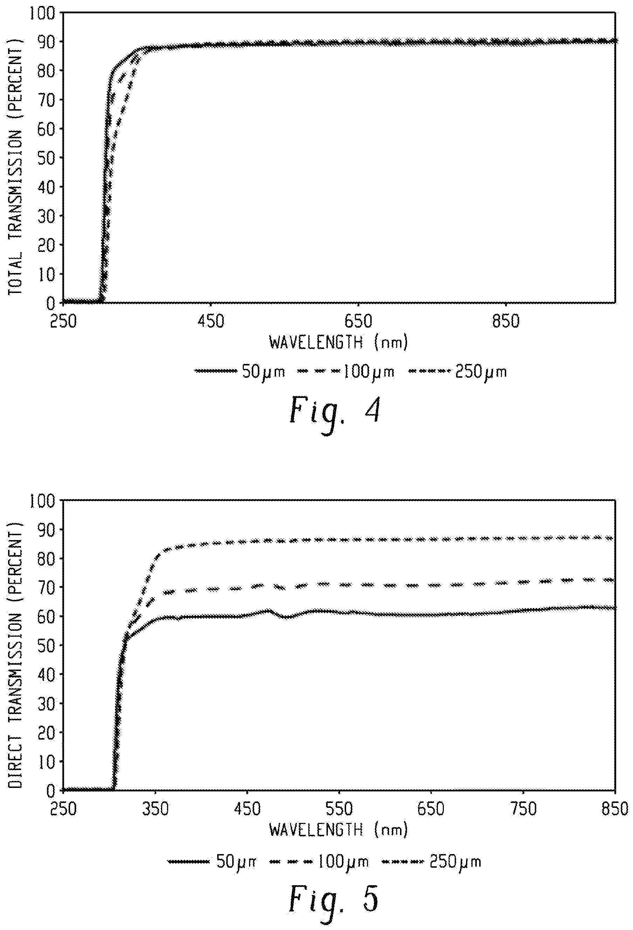

Results: As shown in FIG. 4, as the total thickness of the transparent multilayer film increased in Example 2, the total transmission in the wavelength range of 300 nm to 360 nm decreased, which was an indication of increase in light absorption by the transparent multilayer films. On the other hand, total transmission in the visible region of the electromagnetic spectrum (i.e., 360-750 nm) was independent of the total thicknesses.

The total transmission, direct transmission, and total reflectance (all at a wavelength of 550 nm) for Example 2 and Comparative Example A are summarized in Table 3.

Table 3

| | Example 2 | | | Comparative Example A | | |
|---|---|---|---|---|---|---|
| Total thickness (micrometers) | 50 | 100 | 250 | 50 | 100 | 200 |
| Total Transmission at 550 nm (%) | 88.97 | 89.17 | 89.87 | 61.79 | 62.50 | 62.77 |
| Direct Transmission at 550 nm (%) | 62.14 | 70.69 | 86.31 | 61.09 | 61.39 | 61.46 |
| Total Reflectance at 550 nm (%) | 9.70 | 9.72 | 9.36 | 32.0 | 31.25 | 31.46 |

In Comparative Example A, varying total thicknesses of the transparent multilayer film from 50 to 200 micrometers did not affect the total transmission, direct transmission, or total reflectance significantly. At the same total thickness, a higher total transmission and lower total reflection was measured for Example 2 as compared to Comparative Example A. These differences were expected because the difference between the refractive indexes of PC and SPG PET is smaller as compared to the difference between the refractive indexes of PC and PMMA.

However, there were significant differences in the direct transmission through the transparent multilayer films produced in Example 2 as compared to Comparative Example A. In Example 2, the direct transmissions through the transparent multilayer films was surprisingly high in comparison with the direct transmissions through the transparent multilayer films in Comparative Example A.

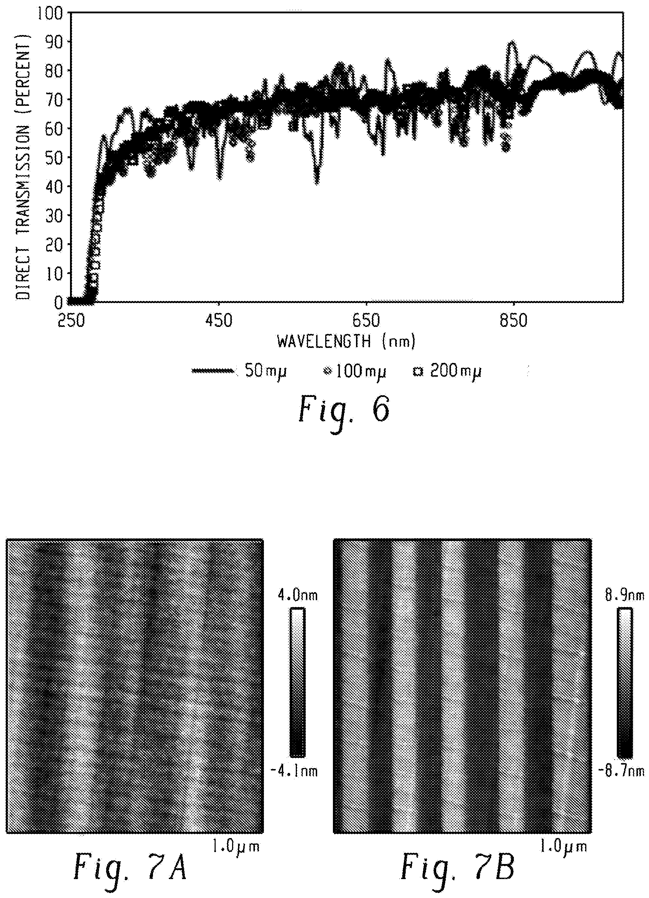

As shown in FIG. 6, the direct transmission spectra for the transparent multilayer films of Comparative Example A have strong interference fringes. When light goes through polymer A and polymer B alternating layers of the same optical thickness, a small amount of light is reflected at each interface between very thin individual layers of two polymers having two different refractive indices. If the reflections from the interfaces leave the film in phase, constructive inference yields high-intensity reflections. The intensity of reflections depends on the number of alternating layers and the difference in refractive index (RI) between the two polymers. Due to a higher difference in refractive indices for PC and PMMA the reflections are more intense than in PC and SPG PET alternating layers.

Also, it was surprising that the direct transmission through the transparent multilayer films produced in Example 2 increased with the increase in the total thickness of the transparent multilayer film. For instance, the 250 micrometer thick transparent multilayer film had 24% more direct transmission than the transparent multilayer film with a 50 micrometer thickness.

A greater amount of direct transmission through transparent multilayer films is advantageous for display applications, where a greater amount of light transmission at a zero angle of incident normal to the surface (direct transmission) is one of the desired optical properties. As it was shown in Example 2 that the largest amount of direct transmission was seen in the thickest transparent multilayer film produced, the PC and SPG PET transparent multilayer film can be produced with less complex processes while still allowing for a desired amount of direct transmission of light. This advantage is due to the complexity of manufacturing of the transparent multilayer films decreasing as the total thickness increases. Thus, the transparent multilayer films of the present disclosure allow for greater freedom in designing and manufacturing transparent multilayer films.

Another advantage of the transparent multilayer films produced in Example 2 was excellent color consistency at various viewing angles. Specifically, the transparent multilayer films of Example 2 exhibited no changes in perceived color when the transparent multilayer film was tilted. In contrast, changes in the reflected color were observed at increasing observation angles in the transparent multilayer films produced in Comparative Example A.

The transparent multilayer films produced in Example 2 and Comparative Example A were viewed using Bruker Dimension FastScan atomic force microscopy (AFM) under a Light Microscope Olympus in QNM mode with a 0.5Hz scan rate. As shown in FIG. 7A and 7B, the transparent multilayer film of Example 2 (FIG. 7A) had interfaces that were less sharp compared to Comparative Example A (FIG. 7B) that indicates thermodynamic mixing between portions of the PC and the SPG PET in the former. The polymers with a differential solubility parameter of equal to or less than 2.2 $MPa^{1/2}$, such as polycarbonate and spiroglycol modified polyethylene terephthalate, showed thermodynamic miscibility and rheological compatibility as seen in the AFM image. In contrast, Comparative Example A had a differential solubility parameter higher than 2.2 for PC and PMMA and showed sharp transitions between individual layers and poor thermodynamic miscibility, as seen in the AFM image.

Thus, the transparent multilayer films of the present disclosure allow for greater freedom in designing and manufacturing transparent multilayer films due to the use of polymer A and polymer B in adjacent layers, which may have a difference in refractive indexes greater than 0.05, and thicker individual layers or thicker transparent multilayer films.

**Claims**

1.  A transparent multilayer film comprising:

    a plurality of layers comprising,

    a polymer A layer comprising polymer A; and
    a polymer B layer comprising polymer B adjacent to the polymer A layer, wherein at least one of:

    a differential solubility parameter ($\Delta\delta_{AB}$) of polymer A towards polymer B is equal to or less than 2.2 $MPa^{1/2}$; and
    a differential solubility parameter ($\Delta\delta_{BA}$) of polymer B towards polymer A is equal to or less than 2.2 $MPa^{1/2}$;

    wherein the multilayer film comprises greater than 250 layers;
    wherein the transparent multilayer film has a direct transmission of light at a wavelength in the range of 360 nanometers to 750 nanometers of at least 70%, (measured as disclosed on page 14) and wherein a total Thickness of the transparent multilayer film is greater than or equal to 70 micrometers.

2.  The transparent multilayer film of Claim 1, wherein polymer A comprises polycarbonate, preferably polymer A comprises a polycarbonate copolymer.

3.  The transparent multilayer film of any one or more of the preceding claims, wherein polymer B comprises at least one of a copolyester, acrylate, and sulfone-based polymer; preferably wherein polymer B comprises the copolyester; more preferably wherein polymer B comprises spiroglycol modified polyethylene terephthalate, poly-cyclohexylenedimethylene terephthalate glycol, poly(1,4-cyclohexylenedimethylene 1,4-cyclohexanedicarboxylate), polyethyelene naphthalate, or a combination comprising at least one of the foregoing.

4.  The transparent multilayer film of any one or more of the preceding claims, wherein the plurality of layers comprises alternating layers of polymer A and polymer B.

5.  The transparent multilayer film of any one or more of the preceding claims, wherein an absolute difference between a refractive index of polymer A and a refractive index of polymer B is less than or equal to 0.15, or less than or equal to 0.10, preferably less than or equal to 0.05, measured at a wavelength of 589 nanometers.

6.  The transparent multilayer film of any one or more of the preceding claims, wherein a refractive index of polymer A is 1.57 to 1.59, measured at a wavelength of 589 nanometers.

7.  The transparent multilayer film of any one or more of the preceding claims, wherein a refractive index of polymer B is 1 50 to 1,63, measured at a wavelength of 589 nanometers.

8.  The transparent multilayer film of any one or more of the preceding claims, wherein a total thickness of the transparent multilayer film is greater than or equal to 100 micrometers, or greater than or equal to 150 micrometers.

9.  The transparent multilayer film of any one or more of the preceding claims, wherein a thickness of each of the plurality of layers is greater than or equal to 90 nanometers, or greater than or equal to 100 nanometers, preferably greater than or equal to 110 nanometers.

10. The transparent multilayer film of any one or more of the preceding claims, wherein a volume ratio of polymer A to polymer B is 20:80 to 80:20, or 40:60 to 60:40.

11. The transparent multilayer film of any one or more of the preceding claims, wherein, when light at a wavelength of 360 to 750 nanometers is directed towards the transparent multilayer film, a direct transmission of the light is greater than or equal to 80%.

12. The transparent multilayer film of any one or more of the preceding claims, wherein, when light at a wavelength of 360 to 750 nanometers is directed towards the transparent multilayer film, a total reflectance of the light is less than or equal to 30%, or less than or equal to 25%, preferably less than or equal to 20%,

**13.** An article comprising the transparent multilayer film of any one or more of the preceding claims.

**14.** The article of Claim 13, wherein the article comprises a display, security window film, ultraviolet light reflector, infrared light reflector, reflective polarizer, optical filter, or a combination comprising at least one of the foregoing.

**15.** A method for producing the transparent multilayer film of any one or more of Claims 1-12, comprising: coextruding polymer A and polymer B to form the transparent multilayer film.

**16.** The method of Claim 15 further comprising splitting the coextruded polymer A and polymer B to obtain two or more sub-streams, repositioning the sub-streams an overlapping manner, and contacting the sub-streams to obtain alternating layers of polymer A and polymer B.

**17.** The method of any one or more of Claims 15-16 , wherein the coextruding is at temperature of 200°C to 320°C, or 220°C to 300°C, preferably 240°C to 280°C.

**18.** A method for converting the transparent multilayer film of any one or more of Claims 1-11 into an article comprising: shaping the transparent multilayer film to obtain the article, wherein the shaping comprises at least one of thermoforming and vacuum forming.

**Patentansprüche**

**1.** Transparenter Mehrschichtfilm aufweisend:

eine Vielzahl von Schichten aufweisend,

eine Polymer A-Schicht aufweisend Polymer A; und
eine Polymer B-Schicht aufweisend Polymer B benachbart zur Polymer A-Schicht,

wobei wenigstens eines von:

einem differentiellen Löslichkeitsparameter ($\Delta\delta_{AB}$)des Polymers A in Richtung Polymer B gleich oder kleiner als 2.2MPa$^{1/2}$ ist; und
einem differentiellen Löslichkeitsparameter ($\Delta\delta_{BA}$)des Polymers B in Richtung Polymer A gleich oder kleiner als 2.2MPa$^{1/2}$ ist;
wobei der Mehrschichtfilm mehr als 250 Schichten aufweist;
wobei der transparente Mehrschichtfilm eine direkte Transmission des Lichts bei einer Wellenlänge im Bereich von 360 Nanometer bis 750 Nanometer von mindestens 70% hat, (gemessen wie auf Seite 14 offenbart) und wobei die Gesamtdicke des transparenten Mehrschichtfilms größer oder gleich 70 Mikrometer ist.

**2.** Transparenter Mehrschichtfilm nach Anspruch 1, wobei Polymer A Polycarbonat aufweist, vorzugsweise Polymer A ein Polycarbonat-Copolymer aufweist.

**3.** Transparenter Mehrschichtfilm nach einem oder mehreren der vorhergehenden Ansprüche, wobei Polymer B wenigstens eines von Copolyester, Acrylat, und sulfonbasiertes Polymer aufweist; vorzugsweise wobei Polymer B das Copolyester aufweist; noch bevorzugter wobei Polymer B spiroglykolmodifiziertes Polyethylenterephtalat, Poly-cyclohexylendimethylenterephtalat-Glykol, Poly(1,4-cyclohexylendimethylen 1,4-cyclohexandicarboxylat), Polyethylennaphtalat aufweist, oder eine Kombination wenigstens eines der Vorhergehenden aufweist.

**4.** Transparenter Mehrschichtfilm nach einem oder mehreren der vorhergehenden Ansprüche, wobei die Vielzahl von Schichten alternierende Schichten von Polymer A und Polymer B aufweist.

**5.** Transparenter Mehrschichtfilm nach einem oder mehreren der vorhergehenden Ansprüche, wobei eine absolute Differenz zwischen einem Brechungsindex von Polymer A und einem Brechungsindex von Polymer B weniger oder gleich 0.15, oder weniger oder gleich 0.10, vorzugsweise weniger oder gleich 0.05 ist, gemessen bei einer Wellenlänge von 589 Nanometer.

**6.** Transparenter Mehrschichtfilm nach einem oder mehreren der vorhergehenden Ansprüche, wobei der Brechungsindex von Polymer A 1.57 bis 1.59 ist, gemessen bei einer Wellenlänge von 589 Nanometer.

**7.** Transparenter Mehrschichtfilm nach einem oder mehreren der vorhergehenden Ansprüche, wobei der Brechungsindex von Polymer B 1 bis 1.63 ist, gemessen bei einer Wellenlänge von 589 Nanometer.

**8.** Transparenter Mehrschichtfilm nach einem oder mehreren er vorhergehenden Ansprüche, wobei die Gesamtdicke des transparenten Mehrschichtfilms größer oder gleich 100 Mikrometer, oder größer oder gleich 150 Mikrometer ist.

**9.** Transparenter Mehrschichtfilm nach einem oder mehreren der vorhergehenden Ansprüche, wobei eine Dicke von jeder der Vielzahl von Schichten größer oder gleich 90 Nanometer, oder größer oder gleich 100 Nanometer, vorzugsweise größer oder gleich 110 Nanometer ist.

**10.** Transparenter Mehrschichtfilm nach einem oder mehreren der vorhergehenden Ansprüche, wobei das Volumenverhältnis von Polymer A zu Polymer B 20:80 bis 80:20, oder 40:60 bis 60:40 ist.

**11.** Transparenter Mehrschichtfilm nach einem oder mehreren der vorhergehenden Ansprüche, wobei, wenn Licht mit einer Wellenlänge von 360 zu 750 Nanometer in Richtung des transparenten Mehrschichtfilms geleitet wird, eine direkte Transmission des Lichts größer oder gleich 80% ist.

**12.** Transparenter Mehrschichtfilm nach einem oder mehreren der vorhergehenden Ansprüche, wobei, wenn Licht mit einer Wellenlänge von 360 zu 750 Nanometer in Richtung des transparenten Mehrschichtfilms geleitet wird, ein Gesamtreflexionsgrad des Lichts weniger als oder gleich 30%, oder weniger als oder gleich 25%, insbesondere weniger als oder gleich 20% ist.

**13.** Artikel aufweisend den transparenten Mehrschichtfilm eines oder mehrerer der vorhergehenden Ansprüche.

**14.** Artikel nach Anspruch 13, wobei der Artikel ein Display, Sicherheitsfensterfolie, Ultraviolett-Licht-Reflektor, Infrarot-Licht-Reflektor, reflektierender Polarisator, optischer Filter aufweist, oder eine Kombination wenigstens eines der Vorhergehenden aufweist.

**15.** Verfahren zur Herstellung des transparenten Mehrschichtfilms nach einem der vorhergehenden Ansprüche 1 bis 12, umfassend: Coextrudieren von Polymer A und Polymer B zur Herstellung des Transparenten Mehrschichtfilms.

**16.** Verfahren nach Anspruch 15, ferner umfassend Aufspalten des coextrudierten Polymer A und Polymer B, um zwei oder mehr Teilströme zu erhalten, Repositionieren der Teilströme in überlappender Weise, und Kontaktieren der Teilströme um alternierende Schichten von Polymer A und Polymer B zu erhalten.

**17.** Verfahren nach einem oder mehreren der Ansprüche 15-16, wobei das Coextrudieren bei einer Temperatur von 200°C bis 320°C, oder 220°C bis 300°C, vorzugsweise 240°C bis 280°C durchgeführt wird.

**18.** Verfahren zur Konvertierung des transparenten Mehrschichtfilms nach einem oder mehreren der Ansprüche 1 bis 11 in einen Artikel umfassend: Formen des transparenten Mehrschichtfilms, um einen Artikel zu erhalten, wobei das Formen wenigstens eines aus Thermoformen und Vakuumformen umfasst.

**Revendications**

**1.** Film multicouche transparent comprenant :

une pluralité de couches comprenant,

une couche de polymère A comprenant du polymère A ; et
une couche de polymère B comprenant du polymère B, adjacente à la couche de polymère A,

avec au moins l'un parmi :

un paramètre de solubilité différentielle ($\Delta\delta_{AB}$) du polymère A par rapport au polymère B est égal ou inférieur à 2,2 MPa$^{1/2}$ ; et
un paramètre de solubilité différentielle ($\Delta\delta_{BA}$) du polymère B par rapport au polymère A est égal ou inférieur à 2,2 MPa$^{1/2}$;

le film multicouche comprenant plus de 250 couches ;
le film multicouche transparent ayant une transmission directe de la lumière d'au moins 70 % à une longueur d'onde située dans la fourchette comprise entre 360 nanomètres à 750 nanomètres (mesurée comme indiqué à la page 14), et une épaisseur totale du film multicouche transparent étant supérieure ou égale à 70 micromètres.

2. Film multicouche transparent selon la revendication 1, dans lequel le polymère A comprend du polycarbonate, de préférence le polymère A comprend un copolymère de polycarbonate.

3. Film multicouche transparent selon l'une quelconque ou plusieurs des revendications précédentes, dans lequel le polymère B comprend au moins l'un parmi un copolyester, de l'acrylate et un polymère à bas de sulfone ; le polymère B comprenant de préférence un copolyester; le polymère B comprenant plus préférablement du poly(téréphtalate d'éthylène) modifié par du spiroglycol, du polycyclohexylènediméthylène téréphtalate glycol, du poly(1,4-cyclohexylènediméthylène 1,4-cyclohexanedicarboxylate), du polyéthylène naphtalate, ou une combinaison comprenant au moins l'un des éléments précédents.

4. Film multicouche transparent selon l'une quelconque ou plusieurs des revendications précédentes, dans lequel la pluralité de couches comprend des couches alternées de polymère A et de polymère B.

5. Film multicouche transparent selon l'une quelconque ou plusieurs des revendications précédentes, dans lequel une différence absolue entre un indice de réfraction du polymère A et un indice de réfraction du polymère B, mesurés à une longueur d'onde de 589 nanomètres, est inférieure ou égale à 0,15, ou inférieure ou égale à 0,10, de préférence inférieure ou égale à 0,05.

6. Film multicouche transparent selon l'une quelconque ou plusieurs des revendications précédentes, dans lequel l'indice de réfraction du polymère A, mesuré à une longueur d'onde de 589 nanomètres, est compris entre 1,57 et 1,59.

7. Film multicouche transparent selon l'une quelconque ou plusieurs des revendications précédentes, dans lequel l'indice de réfraction du polymère B, mesuré à une longueur d'onde de 589 nanomètres est compris entre 1,50 et 1,63.

8. Film multicouche transparent selon l'une quelconque ou plusieurs des revendications précédentes, dans lequel une épaisseur totale du film multicouche transparent est supérieure ou égale à 100 micromètres, ou supérieure ou égale à 150 micromètres.

9. Film multicouche transparent selon l'une quelconque ou plusieurs des revendications précédentes, dans lequel l'épaisseur de chacune des couches de la pluralité de couches est supérieure ou égale à 90 nanomètres, ou supérieure ou égale à 100 nanomètres, de préférence supérieure ou égale à 110 nanomètres.

10. Film multicouche transparent selon l'une quelconque ou plusieurs des revendications précédentes, dans lequel un rapport volumique du polymère A au polymère B est compris entre 20:80 et 80:20, ou entre 40:60 et 60:40.

11. Film multicouche transparent selon l'une quelconque ou plusieurs des revendications précédentes, dans lequel une transmission directe de la lumière est supérieure ou égale à 80 % lorsque de la lumière ayant une longueur d'onde comprise entre 360 et 750 nanomètres est dirigée vers le film multicouche transparent.

12. Film multicouche transparent selon l'une quelconque ou plusieurs des revendications précédentes, dans lequel, lorsque de la lumière ayant une longueur d'onde comprise entre 360 et 750 nanomètres est dirigée vers le film multicouche transparent, une réflectance totale de la lumière est inférieure ou égale à 30 %, ou inférieure ou égale à 25 %, de préférence inférieure ou égale à 20 %.

13. Objet comprenant le film multicouche transparent selon l'une quelconque ou plusieurs des revendications précédentes.

14. Objet selon la revendication 13, dans lequel l'objet comprend un écran, un film de protection pour fenêtre, un réflecteur de lumière ultraviolette, un réflecteur de lumière infrarouge, un polariseur réfléchissant, un filtre optique ou une combinaison comprenant au moins l'un des éléments précédents.

15. Procédé de production du film multicouche transparent selon l'une quelconque ou plusieurs des revendications 1 à 12, comprenant l'étape consistant: à coextruder le polymère A et le polymère B pour former le film multicouche transparent.

16. Procédé selon la revendication 15, comprenant en outre les étapes consistant à diviser le polymère A et le polymère B coextrudés pour obtenir deux ou plusieurs sous-flux, repositionner les sous-flux de manière à ce qu'ils se chevauchent, et mettre en contact des sous-flux pour obtenir des couches alternées de polymère A et de polymère B.

17. Procédé selon l'une quelconque ou plusieurs des revendications 15-16, dans lequel la coextrusion est effectuée à une température comprise entre 200 °C et 320 °C, ou entre 220 °C et 300 °C, de préférence entre 240 °C et 280 °C.

18. Procédé pour convertir le film multicouche transparent selon l'une quelconque ou plusieurs des revendications 1 à 11 en un objet, comprenant l'étape consistant à : mettre en forme le film multicouche transparent pour obtenir l'objet, la mise en forme comprenant au moins l'une parmi le thermoformage et le formage sous vide.

*Fig. 1*

*Fig. 2*

| | | |
|---|---|---|
| Ⓐ PMMA | Ⓖ PES | Ⓜ PSU |
| Ⓑ PPSU | Ⓗ PETG | Ⓝ PCTG |
| Ⓒ PET | Ⓘ PBT | Ⓞ PCCD |
| Ⓓ PCT | Ⓙ PC | Ⓟ 20/80 ITR/BPA |
| Ⓔ 90/10 ITR/BPA | Ⓚ 25/75 PPP-BP/BPA | Ⓠ 49/51 PPP-BP/BPA |
| Ⓕ SAN (26%AN) | Ⓛ SPG-PET 110 | Ⓡ PBMA |

*Fig. 3*

*Fig. 4*

*Fig. 5*

Fig. 6

Fig. 7A

Fig. 7B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Prediction of Solubility-Parameter Components. **VAN KREVELEN, D.W.** Properties of Polymers. Elsevier, 1976, 213-216

- **HANSEN, C.M.** Hansen Solubility Parameters: A User's Handbook. CRC, 2007